# EUROPEAN PATENT APPLICATION

(11) **EP 4 109 128 A1**
(43) Date of publication of application: **28.12.2022**
(21) Application number: 21191925.3
(22) Date of filing: 18.08.2021
(51) Int. Cl.: G01S 7/481, G01S 7/486, G01S 7/499, G01S 17/931, H01L 27/146

(54) **LENS SYSTEM FOR LIDAR**

(30) Priority: 25.06.2021 KR 20210083074
(71) Applicant: Sekonix Co., Ltd, Dongducheon-si, Gyeonggi-do 11307 (KR)
(72) Inventor: HONG, Seung Ki, 16699 GYEONGGI-DO (KR); KIM, Dong Geun, 16684 GYEONGGI-DO (KR); KIM, In Hoe, 12209 GYEONGGI-DO (KR); KIM, Jin Ho, 16817 GYEONGGI-DO (KR)
(74) Representative: Cabinet Beaumont

(57) **Abstract**

A lens system for LiDAR is proposed. The lens system includes: a lens part comprising a plurality of lenses to converge light provided from the light source; and a filter part included in the lens part and configured to transmit the light having a specific wavelength or the light belonging to a specific wavelength band, wherein the filter part is arranged at a specific position of the lens part such that an angle of light incident on the filter part is between 0 and 25 degrees. Accordingly, the lens system for lidar with high efficiency, high resolution, and high performance is provided by arranging the filter part at the position where the angle of light incident inside the lens part composed of the plurality of lenses is minimized.

## Description

### CROSS REFERENCE TO RELATED APPLICATION

The present application claims priority to Korean Patent Application No. 10-2021-0083074, filed June 25, 2021 the entire contents of which is incorporated herein for all purposes by this reference.

### BACKGROUND OF THE INVENTION

### Field of the Invention

The present invention relates to a lens system for LiDAR and, more particularly, to a lens system for LiDAR, the lens system being configured to provide high efficiency and high performance by locating a filter part at a position where an angle of incident light may be minimized.

### Description of the Related Art

A function of LiDAR is to measure the time taken for laser light to return after being emitted or the intensity of the laser light, so as to obtain information about a subject, for example, information on a distance to the subject, and information on a position, a direction, depth, speed, temperature, material distribution, concentration, and the like of the subject.

Such LiDAR has been utilized in various fields such as camera sensors, delivery robots, drones, screen doors, and road traffic systems. In particular, LiDAR is regarded as a key technology for realizing autonomous driving.

The key components that serve as "eyes" in an autonomous vehicle are radar, camera, and LiDAR.

In general, a camera identifies a surrounding object through a lens, a radar emits radio waves to measure a distance or speed, and a LiDAR emits laser light to implement a 3D model of the surrounding environment. In terms of the accuracy of autonomous driving, LiDAR is the most advanced technology because LiDAR is able to recognize not only the presence of obstacles, but also perspective and shapes of the obstacles.

In particular, Flash LiDAR is a method that uses laser light to illuminate in front, and captures, at high speed by a receiver disposed close to a laser, scattered light reflected from an object and the entire scene as a single image. In this regard numerous research has been conducted recently.

In general, such a LiDAR system includes: a laser light source configured to output laser light; a lens part configured to converge the incident laser light; a filter part configured to transmit only light having a specific wavelength; a controller configured to control operations of the above-described components; and a sensor part configured to detect light incident from a subject to obtain information about the subject.

The lens part is composed of a lens system having at least one or more lenses to converge the output light without aberration, and the filter part is included in the lens system to transmit only light having the specific wavelength.

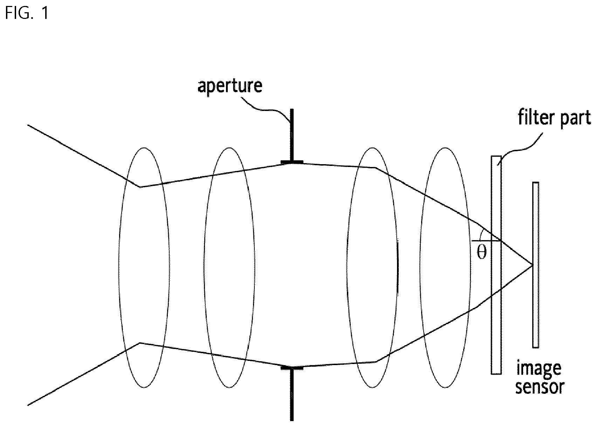

FIG. 1 is a view showing light incident on a filter part in such a conventional lens system, and an angle of light incident on the filter part is indicated by θ.

As shown in FIG. 1, since the conventional filter part is positioned between an image sensor and a last lens, the angle of light incident on the filter part is large, whereby the overall efficiency of the lens system is reduced due to a decrease in transmittance.

### SUMMARY OF THE INVENTION

The present invention is to solve the above problem, and an objective of the present invention is to provide a lens system for LiDAR, the lens system being configured to provide high efficiency and high performance by locating a filter part at a position where an angle of incident light may be minimized.

In the present invention for achieving the above objective, as a technical gist, a lens system for LiDAR and arranged with a plurality of lenses from a light source to an image sensor includes: a lens part comprising the plurality of lenses to converge light provided from the light source; and a filter part included in the lens part and configured to transmit the light having a specific wavelength or the light belonging to a specific wavelength band, wherein the filter part is arranged at a specific position of the lens part such that an angle of the light incident on the filter part is between 0 and 25 degrees with respect to an optical axis direction.

In addition, the filter part may preferably be arranged in front or rear of an aperture included in the lens part.

In addition, the filter part may preferably be arranged at a position in the front or the rear of the lenses included in the lens part, and the angle of the light passing through the lenses may preferably be between 0 and 25 degrees with respect to the optical axis direction.

In addition, the lenses positioned at the front or the rear of the filter part may preferably have positive refractive power.

In addition, the refractive power of the lenses positioned at the front or the rear of the filter part may preferably satisfy 0.01 < P < 0.03.

In addition, the lens part may preferably include a total of four to six lenses.

In addition, at least one lens of the lens part may preferably include an aspherical lens.

In addition, a wavelength of the light transmitted through the filter part may preferably be 905 to 940 nm or 1540 to 1560 nm.

In addition, the lens system for LiDAR may preferably be implemented as a wide-angle type or a narrow-angle type.

The present invention provides the high efficiency, high resolution, high performance lens system for LiDAR by arranging the filter part at the position where the angle of light incident inside the lens part composed of a plurality of lenses is minimized.

In particular, since the high resolution lens system is provided, the present invention is expected to be useful in applying to Flash LiDAR capable of quickly detecting a subject close to a vehicle when driving at low speed and a subject at a distance from the vehicle when driving at high speed.

### BRIEF DESCRIPTION OF THE DRAWINGS

FIG. 1 is a schematic view showing an angle θ of light incident on a filter part in a conventional lens system for LiDAR.
FIG. 2 is a schematic view showing an angle θ' of light incident on a filter part in a lens system for LiDAR according to an exemplary embodiment of the present invention.
FIG. 3 is a schematic view of a (narrow-angle type) lens system for LiDAR according to the exemplary embodiment of the present invention.
FIG. 4 is a schematic view showing a (wide-angle type) lens system for LiDAR according to another exemplary embodiment of the present invention.
FIG. 5 is a view showing changes in transmittance depending on the angles of light incident on the filter part according to the present invention.

### DETAILED DESCRIPTION OF THE INVENTION

The present invention relates to a lens system for LiDAR, and an objective of the present invention is to improve efficiency by locating a filter part at a position where an angle of incident light may be minimized.

Hereinafter, exemplary embodiments of the present invention will be described in detail with reference to the accompanying views.

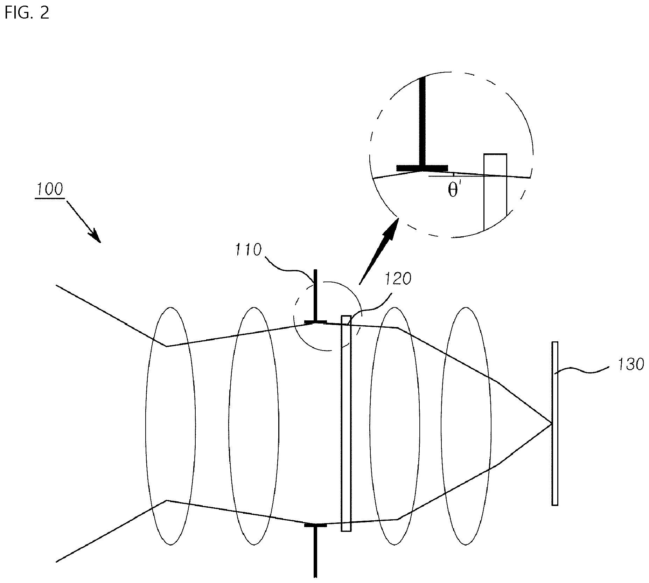

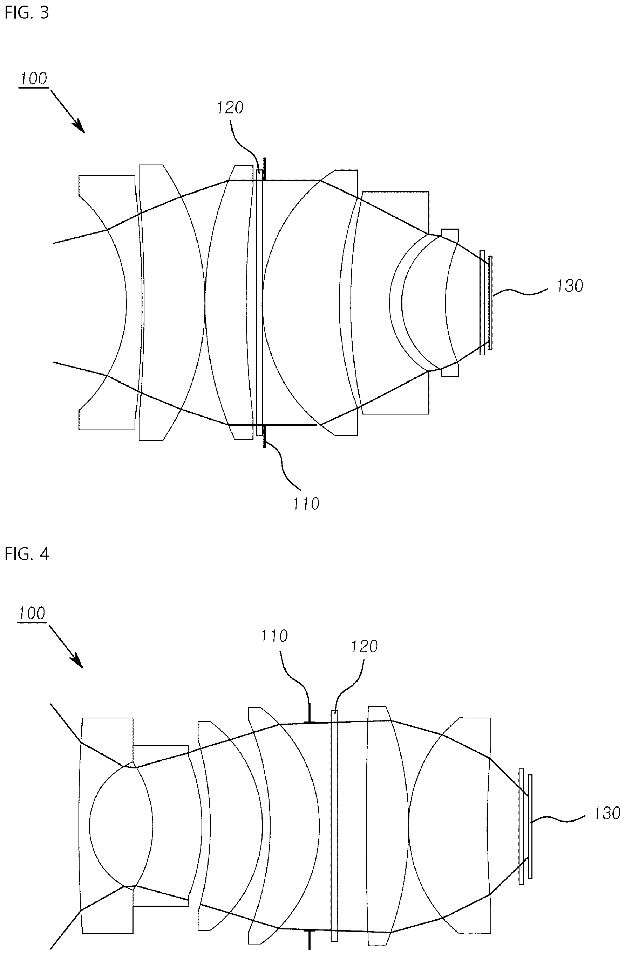

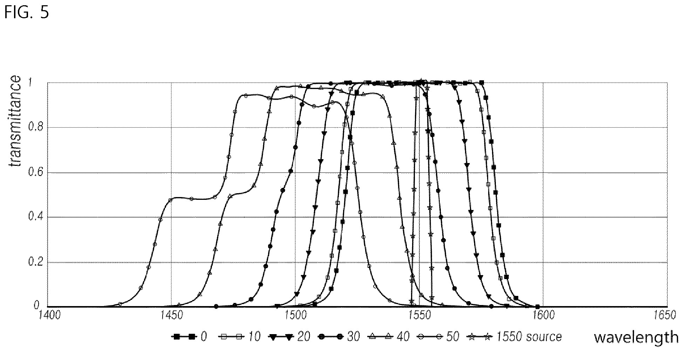

FIG. 2 is a schematic view showing an angle θ' of light incident on the filter part in the lens system for LiDAR according to an exemplary embodiment of the present invention, FIG. 3 is a schematic view of a (narrow-angle type) lens system for LiDAR according to the exemplary embodiment of the present invention, FIG. 4 is a schematic view showing a (wide-angle type) lens system for LiDAR according to another exemplary embodiment of the present invention, and FIG. 5 is a view showing changes in transmittance depending on the angles of light incident on the filter part according to the present invention.

As shown, in the lens system for LiDAR, the lens system provided with a plurality of lenses arranged therein from a light source to an image sensor 130 according to the present invention includes: a lens part 100 including a plurality of lenses to converge light provided from the light source; and a filter part 120 included in the lens part 100 and configured to transmit a specific wavelength, wherein the filter part 120 is arranged at a specific position of the lens part 100 so that an angle of incident light is between 0 and 25 degrees.

In general, a LiDAR system includes: a transmitter configured to illuminate a subject by outputting laser light; a receiver configured to obtain the reflected light of the laser light emitted to the subject; and a controller configured to control operations of the included components and process signals of transmission and reception, whereby information on the subject is detected by analyzing an intensity image and a depth image.

The present invention relates to a lens system included in the receiver, and in the present invention, the reflected light containing information about a subject will be described as incident light, and hereinafter, for convenience, the light provided from a light source will be described as the incident light.

That is, in the present invention, the light source may be a laser-light emitting part included in the transmitter or may be a point (i.e., subject) at which reflected light is generated by reflecting of the laser light emitted to the subject.

The wavelength of laser light emitted from a transmitter may be controlled by a controller, and in the present invention, a center wavelength of the laser light provided from the transmitter may be approximately 930 nm or 1550 nm. Accordingly, the center wavelength of the reflected light reflected from a subject (i.e., light source) may also be approximately 930 nm and 1550 nm.

The lens part 100 according to the present invention includes a plurality of lenses, and provides an image signal to the controller by converging light provided from the light source and providing the light to an image sensor.

The lens part 100 is composed of the plurality of lenses, and by appropriately designing refractive power, shape, dispersion constant, and the like of each lens, the lens part 100 is made compact and lightweight and allows chromatic aberration to be corrected so that high-resolution images may be obtained.

As a preferred exemplary embodiment of the present invention, the lens part 100 includes a plurality of lens arrays, and may preferably be composed of four to six lens groups. The more the number of lenses is provided, the higher resolution and high pixel images may be obtained. In the exemplary embodiment of the present invention, the lens part 100 is designed including a total of six lens groups.

In the lens part 100 having the plurality of lenses, at least one lens includes an aspherical lens, and the lens part 100 is designed by appropriately mixing a spherical lens and the aspherical lens in order to minimize the occurrence of aberration. In the exemplary embodiment of the present invention, the lens part is designed such that five lenses are spherical lenses and one lens is the aspherical lens, wherein the design may be changed according to specifications of a product.

In addition, the filter part 120 is included in the lens part 100, and by transmitting only light having a specific wavelength or light belonging to a specific wavelength band, the rest of the light is blocked. The filter part 120 may be controlled by the controller so as to transmit only light whose center wavelength is a specific wavelength and block light having other wavelengths.

The filter part 120 according to the present invention is arranged at a specific position of the lens part 100 so that an angle θ' of incident light is between 0 and 25 degrees with respect to an optical axis direction. More preferably, depending on the design of a lens group, the filter part 120 is arranged at a specific position of the lens part 100 so that the angle of the incident light is between 0 and 20 degrees with respect to the optical axis direction.

When an angle of light incident on the filter part 120 is 0 degrees (i.e., angle parallel to the optical axis) with respect to the optical axis direction, the light is incident at 90 degrees with respect to a side surface of a light source (i.e., side surface of an object) of the filter part 120, thereby causing light to be incident on the filter part 120 with an incident angle between 0 and 25 degrees with respect to the optical axis direction.

According to the exemplary embodiment of the present invention, the filter part 120 is implemented as a bandpass filter (BPF), and transmittance of light incident at a predetermined angle is lower than transmittance of light incident perpendicularly to the bandpass filter.

FIG. 2 is a schematic view showing an angle θ' of light incident on the filter part 120 in the lens system for LiDAR according to the exemplary embodiment of the present invention. As shown, the light incident on the filter part 120 according to the present invention is incident at a significantly smaller angle with respect to the optical axis than that of the conventional lens system for LiDAR (i.e., θ > θ'). That is, the light is incident nearly perpendicular to the filter part.

As described above, the filter part 120 is arranged at a specific position inside the lens system so as to minimize the angle of light incident on the filter part 120, whereby transmission efficiency may be maximized while allowing only light having a specific wavelength or light having a specific wavelength band to be transmitted.

In the exemplary embodiment of the present invention, the position of the filter part 120 inside the lens system for minimizing an angle of light incident on the filter part 120 is arranged in front or rear of an aperture 110 included in the lens part 100, so that the angle of light incident on the filter part 120 may be minimized. Here, the front means that a filter part is located at a position in the direction of a light source side of an aperture 110, and the rear means that the filter part 120 is located at a position in the direction of an image sensor 130 side of the aperture 110.

In addition, In another exemplary embodiment of the present invention, the filter part 120 is arranged at the front or rear of lenses included in the lens part 100 according to design of a lens group, and is arranged in front or rear of the lenses, the front or rear being a position at which the angle of light passing through the lenses is approximately 0 to 25 degrees with respect to the optical axis direction, so that the angle of light incident to the filter part 120 may be 0 to 25 degrees with respect to the optical axis direction. Here, the front refers to the direction of the light source side of the lenses, and the rear refers to the direction of the image sensor 130 side of the lenses.

That is, in the lens part 100, the filter part 120 may be appropriately arranged at the position where the angle of incident light is 0 to 25 degrees with respect to the optical axis direction, and depending on specifications of the product, the filter part 120 may be arranged between the corresponding lenses, between a lens and the aperture 110, between the aperture 110 and the lens, between the lens and the image sensor 130, or the like.

The lens positioned at the front or rear of the filter part according to the present invention has positive refractive power, so that the angle of light incident to the filter part is reduced.

In addition, the refractive power of the lens positioned at the front or rear of the filter part is set to have a range of 0.01 < P < 0.03, so as to reduce the angle of light incident on the filter part, thereby further increasing the transmittance of light passing through the filter part.

The wavelength or the wavelength band of light transmitted from the filter part 120 of the present invention may be 905 to 940 nm or 1540 to 1560 nm by adjusting the thickness of a coating film, the number of multilayer coating films, and the like according to application, use, and need of the product.

In addition, the lens system for LiDAR according to the present invention may be implemented as a wide-angle type or a narrow-angle type.

The narrow-angle type lens system for LiDAR is composed of a lens part 100 that may detect a distant subject when a vehicle is driving at high speed, and FIG. 3 shows the exemplary embodiment of the narrow-angle type lens system for LiDAR.

In addition, the wide-angle type lens system for LiDAR is composed of a lens part 100 that may detect subjects such as a facing vehicle and landmark that are close to a vehicle having the wide-angle type and driving at low speed, and FIG. 4 is a view showing the exemplary embodiment of the wide-angle type lens system for LiDAR.

According to the exemplary embodiment of FIG. 3, the lens part 100 is configured to include a total of six lenses, and the filter part 120 is positioned adjacent to the front of the aperture 110. Table 1 below shows focal lengths for the lens part according to the exemplary embodiment of FIG. 3.

**[Table 1]**

| | Focal length |
|---|---|
| Lens 1 | -28.666661 |
| Lens 2 | 45.185409 |
| Lens 3 | 66.221234 |
| Filter part (BPF) | Infinity |
| Aperture (Stop) | - |
| Lens 4 | 38.999903 |
| Lens 5 | -29.397258 |
| Lens 6 | 17.000000 |

The refractive power of the lens 3 is 0.0151, and the refractive power of the lens 4 is 0.0256.

According to the exemplary embodiment of FIG. 4, the lens part 100 is configured to include a total of six lenses, and the filter part 120 is positioned adjacent to the rear of the aperture 110. Table 2 below shows focal lengths for the lens part according to the exemplary embodiment of FIG. 4.

**[Table 2]**

| | Focal length |
|---|---|
| Lens 1 | -10.270702 |
| Lens 2 | 145.839772 |
| Lens 3 | 25.257571 |
| Lens 4 | 50.529888 |
| Aperture (Stop) | - |
| Filter part (BPF) | Infinity |
| Lens 5 | 40.768963 |
| Lens 6 | 21.962265 |

The refractive power of the lens 4 is 0.0198, and the refractive power of the lens 5 is 0.0245.

Incident angles of light incident on the filter part 120 according to the exemplary embodiment of FIGS. 3 and 4 are as shown in Tables 3 and 4 below, respectively, and light is incident on the filter part 120 in the range between 0 and 25 degrees.

**[Table 3]**

| | Filter part incident angle (degree) | | | | |
|---|---|---|---|---|---|
| Field (image height) | Principal light beam | Marginal light beam (up) | Marginal light beam (down) | Marginal light beam (left) | Marginal light beam (right) |
| 0 | 0 | 9.0705 | 9.0705 | 9.0705 | 9.0705 |
| 0.431 | 1.2161 | 8.3497 | 9.7068 | 8.6952 | 9.4679 |
| 0.8619 | 2.4297 | 7.6661 | 10.3653 | 8.4311 | 9.9484 |
| 1.2929 | 3.6394 | 7.0362 | 11.0373 | 8.291 | 10.4966 |
| 1.7238 | 4.8452 | 6.4786 | 11.716 | 8.2819 | 11.0985 |
| 2.1548 | 6.0489 | 6.015 | 12.3969 | 8.4047 | 11.7427 |
| 2.5858 | 7.2534 | 5.6696 | 13.0764 | 8.655 | 12.4203 |
| 3.0167 | 8.4623 | 5.466 | 13.7511 | 9.024 | 13.1238 |
| 3.4477 | 9.6792 | 5.4226 | 14.4175 | 9.5012 | 13.8469 |
| 3.8786 | 10.9078 | 5.5467 | 15.0709 | 10.0749 | 14.5836 |
| 4.3096 | 12.1523 | 5.8316 | 15.7055 | 10.7347 | 15.3278 |

As shown in Table 3 above, in the case of the exemplary embodiment of the narrow-angle type, an angle of light beam (light) passing through a filter part is designed to be present within a range of 0 degrees to 16 degrees or less, wherein the angle may vary to some extent depending on the design of the lens group.

**[Table 4]**

| | Filter part incident angle (degree) | | | | |
|---|---|---|---|---|---|
| Field (image height) | Principal light beam | Marginal light beam (up) | Marginal light beam (down) | Marginal light beam (left) | Marginal light beam (right) |
| 0 | 0 | 8.2271 | 8.2271 | 8.2271 | 8.2271 |
| 0.415 | 2.0571 | 6.7259 | 9.6948 | 8.4345 | 8.4345 |
| 0.83 | 4.1171 | 5.2494 | 11.1859 | 8.9996 | 8.9996 |
| 1.245 | 6.1829 | 3.8027 | 12.7017 | 9.8654 | 9.8654 |
| 1.66 | 8.2577 | 2.3921 | 14.2491 | 10.9665 | 10.9665 |
| 2.075 | 10.3448 | 1.0226 | 15.8411 | 12.2457 | 12.2457 |
| 2.49 | 12.4481 | 0.3052 | 17.4957 | 13.66 | 13.66 |
| 2.905 | 14.5721 | 1.5995 | 19.2293 | 15.1794 | 15.1794 |
| 3.32 | 16.7217 | 2.8806 | 21.0475 | 16.7856 | 16.7856 |
| 3.735 | 18.9031 | 4.1913 | 22.9353 | 18.4698 | 18.4698 |
| 4.15 | 21.1236 | 5.6547 | 24.8729 | 20.2314 | 20.2314 |

As shown in Table 4 above, in the case of the exemplary embodiment of the wide-angle type, an angle of light beam (light) passing through a filter part is designed to be present within a range of 0 degrees to 25 degrees or less, wherein the angle may vary to some extent depending on the design of the lens group.

FIG. 5 is a view showing changes in transmittance depending on angles of light incident on the filter part according to the present invention, and it is confirmed that only light in the wavelength band is transmitted when the wavelength of the light is 1550 ± 7.5 nm and the light is incident on the filter part at the angle of 0 to 25 degrees.

Accordingly, the smaller the angle of light incident on the filter part, the higher the transmittance, and only the light having a specific wavelength band is transmitted, and as shown, when the angle of light incident on the filter part is about 0 to 25 degrees, a meaningful figure is confirmed that transmittance of 90% or more is provided while transmitting the specific wavelength, thereby providing a high efficiency lens system.

As described above, the present invention provides the high efficiency, high resolution lens system for LiDAR by arranging the filter part at the position where the angle of light incident inside the lens part composed of the plurality of lenses is minimized.

In particular, in the present invention, the high resolution lens system is provided so that the present invention is expected to be useful in applying to Flash LiDAR capable of quickly detecting a subject close to a vehicle when driving at low speed and a subject at a distance from the vehicle when driving at high speed.

## Claims

1. A lens system for LiDAR and arranged with a plurality of lenses from a light source to an image sensor, the lens system comprising:
a lens part comprising the plurality of lenses to converge light provided from the light source; and
a filter part included in the lens part and configured to transmit the light having a specific wavelength or the light belonging to a specific wavelength band,
wherein the filter part is arranged at a specific position of the lens part such that an angle of the light incident on the filter part is between 0 and 25 degrees with respect to an optical axis direction.

2. The lens system of claim 1, wherein the filter part is arranged in front or rear of an aperture included in the lens part.

3. The lens system of claim 1, wherein the filter part is arranged at a position in the front or the rear of the lenses included in the lens part, and
the angle of the light passing through the lenses is between 0 and 25 degrees with respect to the optical axis direction.

4. The lens system of claim 1, wherein the lenses positioned at the front or the rear of the filter part have positive refractive power.

5. The lens system of claim 1, wherein the refractive power of the lenses positioned at the front or the rear of the filter part satisfies 0.01 < P < 0.03.

6. The lens system of claim 1, wherein the lens part comprises a total of four to six lenses.

7. The lens system of claim 6, wherein at least one lens of the lens part comprises an aspherical lens.

8. The lens system of claim 1, wherein a wavelength of the light transmitted through the filter part is 905 to 940 nm or 1540 to 1560 nm.

9. The lens system of claim 1, wherein the lens system for LiDAR is implemented as a wide-angle type or a narrow-angle type.
